# EUROPÄISCHE PATENTSCHRIFT

(11) **EP 2 989 357 B1**
(45) Veröffentlichungstag und Bekanntmachung des Hinweises auf die Patenterteilung: **27.11.2019**
(21) Anmeldenummer: 14711221.3
(22) Anmeldetag: 17.03.2014
(51) Int. Cl.: F16J 15/34

(54) **GLEITRINGDICHTUNGSANORDNUNG MIT VEREINFACHTEM AUFBAU**
SLIDE RING SEAL ARRANGEMENT WITH A SIMPLIFIED STRUCTURE
ENSEMBLE D'ÉTANCHÉITÉ À BAGUES DE GLISSEMENT À STRUCTURE SIMPLIFIÉE

(30) Priorität: 24.04.2013 DE 102013007165
(43) Veröffentlichungstag der Anmeldung: 02.03.2016
(73) Patentinhaber: EagleBurgmann Germany GmbH & Co. KG, 82515 Wolfratshausen (DE)
(72) Erfinder: JENISCH, Bernhard, 82386 Oberhausen (DE); FICHTNER, Joseph, 82515 Wolfratshausen (DE); DRÖSCHER, Peter, 82538 Geretsried (DE); GERG, Josef, 83674 Gaißach (DE)
(74) Vertreter: Hoefer & Partner Patentanwälte mbB
(86) Internationale Anmeldenummer: PCT/EP2014/055251
(87) Internationale Veröffentlichungsnummer: WO 2014/173585

(56) Entgegenhaltungen:
- DE-A1-102010 054 586
- DE-A1-102011 008 927
- DE-A1-102011 111 697
- DE-U1-202010 001 789
- DE-U1-202010 012 401
- US-A- 5 713 576

## Beschreibung

Die vorliegende Erfindung betrifft eine Gleitringdichtungsanordnung mit einem vereinfachten Aufbau, wobei insbesondere eine Klemmverbindung vorgesehen ist.

Gleitringdichtungsanordnungen sind aus dem Stand der Technik in unterschiedlichen Ausgestaltungen bekannt. Je nach Anwendung müssen dabei im Gehäuse der Gleitringdichtungsanordnung eine oder mehrere Bohrungen bzw. Leitungen für verschiedenste Medien vorgesehen werden. Beispielsweise müssen Leitungen für eine Sperrfluidzufuhr, eine Sperrfluidabfuhr, eine Leckageabfuhr, usw., vorgesehen werden. Bisher werden die Gehäuse der Gleitringdichtungsanordnung mehrteilig ausgeführt, wobei die einzelnen Teile des Gehäuses mittels Schrauben miteinander verbunden werden. Hierbei ergibt sich jedoch das Problem, dass einerseits einander benachbarte Teile des Gehäuses mittels kleinerer Schrauben verbunden werden oder das mehrteilige Gehäuse mittels größerer Schrauben verbunden wird. Weiterhin muss dann das mehrteilige Gehäuse der Gleitringdichtungsanordnung noch an einem statischen Bauteil einer Maschine oder dgl. befestigt werden. Durch die Vielzahl der Verbindungen zwischen den einzelnen Gehäuseteilen ergibt sich das Problem, dass für verschiedene Anwendungen bzw. für verschiedene Kunden häufig verschiedene Gehäuse notwendig sind, in denen jeweils die notwendigen Anschlussbohrungen für die zur Befestigung verwendeten Schrauben individuell vorgesehen werden müssen. Dadurch können jedoch die notwendigen Versorgungsleitungen im Gehäuse nicht einheitlich vorgesehen werden, sondern müssen immer individuell an die jeweiligen Gehäusegegebenheiten angepasst werden. Dies führt zu einer unerwünschten Vielzahl von Sonderkonstruktionen mit entsprechenden Nachteilen hinsichtlich der Kosten derartiger Gleitringdichtungsanordnungen. Ferner ist aus der DE 20 2010 001 789 U1 eine Gleitringdichtungsanordnung gemäß dem Oberbegriff des Anspruches 1 bekannt.

Es ist daher Aufgabe der vorliegenden Erfindung, eine Gleitringdichtungsanordnung bereitzustellen, welche bei einfachem Aufbau und einfacher, kostengünstiger Herstellbarkeit eine einfache Anordnung von Versorgungsleitungen in einem Gehäuse der Gleitringdichtungsanordnung ermöglicht.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Der erfindungsgemäße Gleitringdichtungsanordnung mit den Merkmalen des Anspruchs 1 umfasst einen rotierenden und einen stationären Gleitring, welche zwischen sich einen Dichtspalt begrenzen. Ein Haltering ist vorgesehen, um den stationären Gleitring zu halten. Ferner umfasst die Gleitringdichtungsanordnung ein Gehäuse, wobei zwischen dem Gehäuse und dem Haltering eine Klemmverbindung mittels wenigstens eines Klemmbauteils vorgesehen ist. Hierdurch kann ein Gehäuse mittels einer Klemmverbindung am Haltering des stationären Gleitrings angeordnet werden, so dass die Fixierung des Gehäuses der Gleitringdichtungsanordnung sehr einfach ausgeführt werden kann. Ferner ergibt sich dadurch der Vorteil, dass im Gehäuse Bohrungen für Leitungen problemlos vorgesehen werden können, ohne dass hier Einschränkungen hinsichtlich der Positionierung der Bohrungen für die Leitungen bestehen. Weiter ist das Klemmbauteil der Klemmverbindung eine Senkkopfschraube, wobei die Senkkopfschraube an einem Kopf einen Konus aufweist, welcher für eine Klemmverbindung mit einem ersten konischen Bereich am Gehäuse und einem zweiten konischen Bereich am Haltering eingerichtet ist. Dadurch kann die Klemmverbindung nur über den Kopf der Senkkopfschraube erfolgen.

Um eine möglichst hohe Variabilität beim Vorsehen der Bohrungen für Leitungen zu haben, ist die Klemmverbindung vorzugsweise an einer Stirnseite des Gehäuses vorgesehen.

Weiter bevorzugt ist das Gehäuse einteilig. Das Gehäuse ist dabei besonders bevorzugt im Wesentlichen zylindrisch.

Besonders bevorzugt weist hierbei der Haltering einen radial nach außen vorstehenden Fortsatz auf, wobei der zweite konische Bereich am Fortsatz angeordnet ist. Hierdurch kann ein besonders kompakter Aufbau erreicht werden und insbesondere durch das Vorsehen des nach außen vorstehenden Fortsatzes kann auch eine schnelle und einfache Montage des Gehäuses an den Haltering erfolgen.

Besonders bevorzugt übergreift das Gehäuse den Haltering zumindest teilweise. Dadurch bildet das Gehäuse die äußersten Bereiche der Gleitringdichtungsanordnung, so dass der Haltering durch das Gehäuse in gewissem Umfang geschützt ist. Alternativ könnte auch der Haltering das Gehäuse übergreifen.

Weiter bevorzugt weist das Gehäuse eine Anlagefläche auf, an welcher der Haltering anliegt. Die Anlagefläche ist vorzugsweise eine in radialer Richtung der Gleitringdichtungsanordnung ausgerichtete Ringfläche. Besonders bevorzugt ist dabei zwischen dem Gehäuse und dem Haltering ein umlaufender Fluidkanal ausgebildet. Diese Anordnung hat den Vorteil, dass eine der notwendigen Leitungen schon durch die geometrische Ausgestaltung zwischen dem Gehäuse und dem Haltering zwischen diesen beiden Bauteilen vorgesehen werden kann, so dass eine Bohrung weniger im Gehäuse notwendig ist.

Besonders bevorzugt ist im Haltering ein Verbindungskanal, vorzugsweise mehrere Verbindungskanäle, vorgesehen, welche vom Fluidkanal zu einer Außenseite am Dichtspalt führen. Dadurch kann auf einfache Weise Fluid aus dem Fluidkanal zu einer Außenseite des Dichtspalts der Gleitringdichtungsanordnung geführt werden.

Weiter bevorzugt ist im Gehäuse wenigstens eine Medienleitung zum Zuführen oder Abführen eines Mediums der Gleitringdichtungsanordnung vorgesehen.

Die Gleitringdichtungsanordnung kann erfindungsgemäß als einfache Gleitringdichtungsanordnung ausgebildet sein, oder alternativ auch als doppelte Gleitringdichtungsanordnung mit zwei separaten Gleitringdichtungen vorgesehen sein. Besonders bevorzugt wird die erfindungsgemäße Gleitringdichtungsanordnung dabei zur Abdichtung an Pumpen verwendet.

Nachfolgend werden bevorzugte Ausführungsbeispiele der Erfindung unter Bezugnahme auf die begleitende Zeichnung im Detail beschrieben. In der Zeichnung sind dabei gleiche bzw. funktional gleiche Teile mit den gleichen Bezugszeichen bezeichnet. In der Zeichnung ist:
- Fig. 1: eine schematische, teilweise geschnittene, perspektivische Ansicht einer Gleitringdichtungsanordnung gemäß einem ersten Ausführungsbeispiel, und
- Fig. 2: eine schematische, teilweise geschnittene, perspektivische Ansicht einer Gleitringdichtungsanordnung gemäß einem zweiten Ausführungsbeispiel.

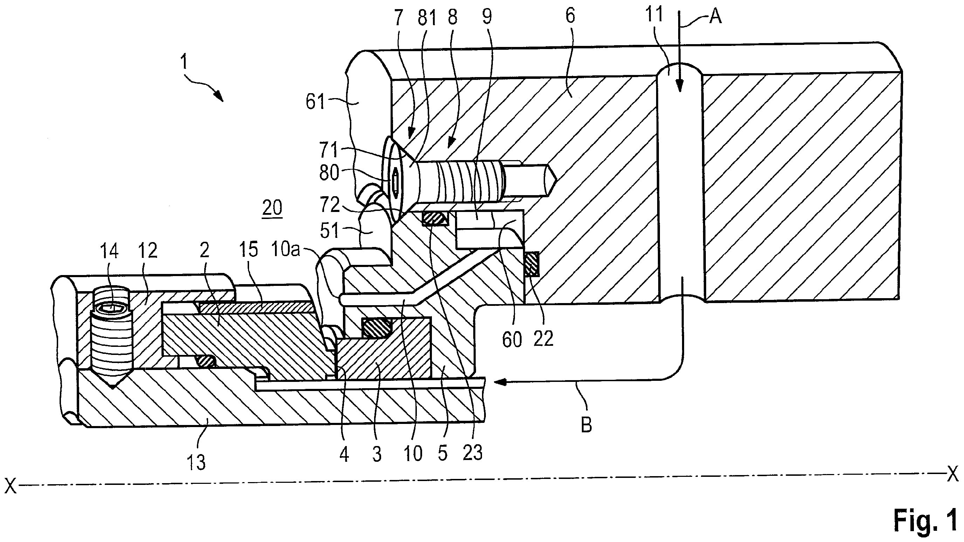

Wie aus Fig. 1 ersichtlich ist, umfasst die erfindungsgemäße Gleitringdichtungsanordnung 1 einen rotierenden Gleitring 2 und einen stationären Gleitring 3, welche zwischen sich in bekannter Weise einen Dichtspalt 4 begrenzen. Der rotierende Gleitring 2 weist dabei an seinem äußeren Umfang eine Bandage 15 auf, wobei eine Rotation einer nicht gezeigten Welle von der Welle auf eine Wellenhülse 13 und von der Wellenhülse 13 auf einen mittels Verbindungsschrauben 14 mit der Wellenhülse 13 verbundenen Halter 12 übertragen werden. Der Halter 12 greift dabei an der Außenseite der Bandage 15 an und überträgt ein Drehmoment auf den rotierenden Gleitring 2.

Der stationäre Gleitring 3 ist über einen Haltering 5 mit einem einteiligen Gehäuse 6 verbunden. Wie aus Fig. 1 ersichtlich ist, übergreift der Haltering 5 dabei den stationären Gleitring 3 in axialer Richtung X-X der Gleitringdichtungsanordnung.

Zwischen dem Haltering 5 und dem Gehäuse 6 ist dabei eine Klemmverbindung 7 ausgebildet. Die Klemmverbindung 7 ist in diesem Ausführungsbeispiel mittels eines Klemmbauteils 8 ausgebildet, welches in diesem Ausführungsbeispiel eine Senkkopfschraube ist. Hierbei sind auf einem Durchmesser am Gehäuse 6 eine Vielzahl von Klemmbauteilen 8 vorgesehen. Zum Klemmen weist das Klemmbauteil 8 einen Kopf 80 und einen an der Unterseite des Kopfs angeordneten Konus 81 auf. Weiterhin weist das Gehäuse 6 einen ersten konischen Bereich 71 und der Haltering 5 einen zweiten konischen Bereich 72 auf. Der Konus 81 des Klemmbauteils 8 befindet sich dabei mit dem ersten und zweiten konischen Bereich 71, 72 in Kontakt und verbindet über eine dadurch aufgebrachte Klemmkraft das Gehäuse 6 mit dem Haltering 5.

Wie aus Fig. 1 ersichtlich ist, ist die Klemmverbindung 7 dabei an einer Stirnseite 61 des Gehäuses 6 angeordnet. Dadurch ergibt sich eine leichte Zugänglichkeit der Klemmverbindung, so dass die Klemmverbindung schnell und einfach ausgeführt bzw. wieder gelöst werden kann.

Wie weiter aus Fig. 1 ersichtlich ist, weist der Haltering 5 einen Fortsatz 51 auf, an welchem der zweite konische Bereich 72 ausgebildet ist. Dadurch wird die Klemmverbindung 7 radial nach außen versetzt, so dass eine leichte Zugänglichkeit weiter verbessert wird.

Wie aus Fig. 1 ersichtlich ist, ist das Gehäuse 6 einteilig ausgebildet und es müssen außer den axialen Bohrungen zur Aufnahme der Klemmbauteile 8 keinerlei weitere Bohrungen vorgesehen werden, welche Gehäuseteile oder dgl. miteinander verbinden müssten. Dadurch können Leitungen, wie beispielsweise eine Medienleitung 11, beliebig im Gehäuse 6 positioniert werden. Die Medienleitung 11 dieses Ausführungsbeispiels dient zum Zuführen eines Sperrmediums zur Innenseite der Gleitringdichtung, was durch die Pfeile A und B angedeutet ist. Die Gleitringdichtungsanordnung 1 dichtet dabei einen Produktbereich 20 von der Umgebung ab.

Ferner weist das Gehäuse 6 eine Anlagefläche 60 auf, an welcher der Haltering 5 anliegt. Durch den am Haltering 5 vorgesehenen Fortsatz 51 kann dabei zwischen dem Haltering 5 und dem Gehäuse 6 ein umlaufender Fluidkanal 9 ausgebildet werden. Der Fluidkanal 9 weist in diesem Ausführungsbeispiel einen rechteckigen Querschnitt auf und ist ringförmig an der äußeren Mantelfläche des Halterings 5 vorgesehen. Erste und zweite O-Ringe 22, 23 dienen dabei zur Abdichtung des Fluidkanals 9. Weiterhin ist im Haltering 5 wenigstens ein Verbindungskanal 10 ausgebildet, welcher den Fluidkanal 9 mit dem Produktbereich 20 verbindet. Eine Mündung 10a des Verbindungskanals 10 ist dabei nahe am Dichtspalt 4 der Gleitringdichtungsanordnung. Hierdurch wird insbesondere ein Spülen der Gleitringdichtungsanordnung am radial äußeren Bereich der beiden Gleitringe 2, 3 ermöglicht.

Somit kann erfindungsgemäß eine Gleitringdichtungsanordnung bereitgestellt werden, welche ein einteiliges Gehäuse 6 aufweist, in welchem Leitungen und Kanäle und dgl. in beliebiger Weise angeordnet werden können. Durch das Vorsehen der Klemmverbindung 7 zwischen dem Gehäuse 6 und dem Haltering 5 wird eine sichere Anbindung des Gehäuses 6 an die Gleitringdichtungsanordnung ermöglicht. Da die Klemmverbindung 7 an der Stirnseite 61 des Gehäuses 6 angeordnet ist, ergeben sich praktisch keinerlei Einschränkungen hinsichtlich einer Positionierung von Leitungen, wie z.B. der Medienleitung 11 im Gehäuse 6.

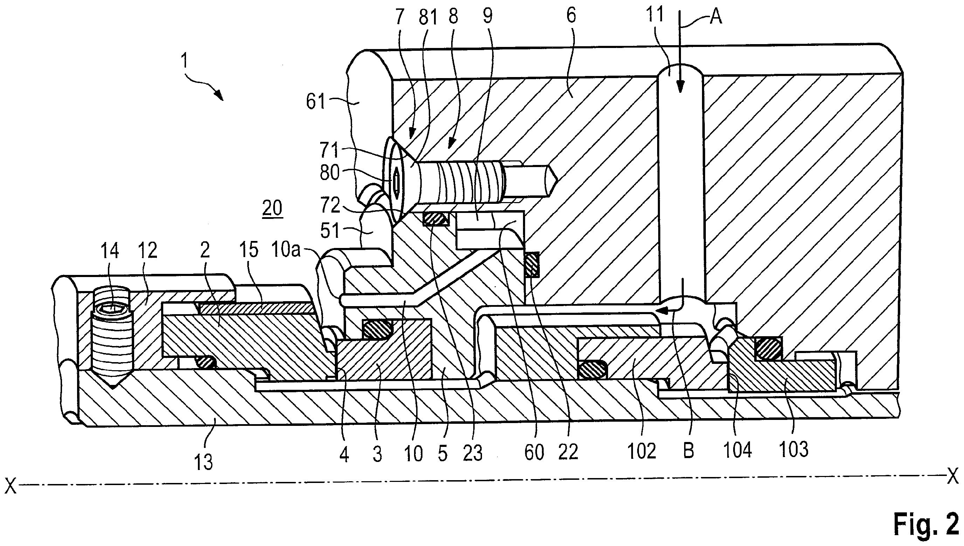

Fig. 2 zeigt eine Gleitringdichtungsanordnung 1 gemäß einem zweiten Ausführungsbeispiel der Erfindung. Die Gleitringdichtungsanordnung 1 des zweiten Ausführungsbeispiels weist im Unterschied zum ersten Ausführungsbeispiel noch eine zweite Gleitringdichtung mit einem rotierenden Gleitring 102 und einem stationären Gleitring 103 auf, welche zwischen sich einen Dichtspalt 104 definieren. Somit ist die Gleitringdichtung 1 des zweiten Ausführungsbeispiels als Doppeldichtung ausgebildet, wobei das einteilige Gehäuse 6 die zweite Gleitringdichtung vollständig in Axialrichtung X-X überdeckt.

### Bezugszeichenliste

- 1: Gleitringdichtungsanordnung
- 2: rotierender Gleitring
- 3: stationärer Gleitring
- 4: Dichtspalt
- 5: Haltering
- 6: Gehäuse
- 7: Klemmverbindung
- 8: Klemmbauteil
- 9: Fluidkanal
- 10: Verbindungskanal
- 11: Medienkanal
- 12: Halter
- 13: Wellenhülse
- 14: Verbindungsschrauben
- 15: Bandage
- 20: Produktbereich
- 22, 23: O-Ringe
- 51: Fortsatz
- 60: Anlagefläche
- 61: Stirnseite
- 71: erster konischer Bereich
- 72: zweiter konischer Bereich
- 80: Kopf
- 81: Konus
- A, B: Pfeile
- X-X: Axialrichtung

## Patentansprüche

1. Gleitringdichtungsanordung umfassend:
- einen rotierenden Gleitring (2) und einen stationären Gleitring (3), welche zwischen sich einen Dichtspalt (4) begrenzen,
- ein Gehäuse (6), und
- einen Haltering (5) zum Halten des stationären Gleitrings (3),
- wobei
- zwischen dem Gehäuse (6) und dem Haltering (5) eine Klemmverbindung (7) mittels wenigstens eines Klemmbauteils (8) vorgesehen ist, und
- das Klemmbauteil (8) eine Senkkopfschraube ist, welche an einem Kopf (80) einen Konus (81) aufweist, **dadurch gekennzeichnet, dass** der Konus (81) für die Klemmverbindung mit einem ersten konischen Bereich (71) am Gehäuse (6) und einem zweiten konischen Bereich (72) am Haltering (5) eingerichtet ist.

2. Gleitringdichtungsanordnung nach Anspruch 1, **dadurch gekennzeichnet, dass** die Klemmverbindung (7) an einer Stirnseite (61) des Gehäuses (6) angeordnet ist.

3. Gleitringdichtungsanordnung nach einem der vorhergehenden Ansprüche, **dadurch gekennzeichnet, dass** das Gehäuse (6) einteilig ist.

4. Gleitringdichtungsanordnung nach Anspruch 1, **dadurch gekennzeichnet, dass** der Haltering (5) einen radial nach außen vorstehenden Fortsatz (51) aufweist, wobei der zweite konische Bereich (72) am Fortsatz (51) ausgebildet ist.

5. Gleitringdichtungsanordnung nach einem der vorhergehenden Ansprüche, **dadurch gekennzeichnet, dass** das Gehäuse (6) den Haltering (5) teilweise übergreift.

6. Gleitringdichtungsanordnung nach einem der vorhergehenden Ansprüche, **dadurch gekennzeichnet, dass** das Gehäuse (6) eine Anlagefläche (60) aufweist, an welcher der Haltering (5) anliegt.

7. Gleitringdichtungsanordnung nach Anspruch 6, **dadurch gekennzeichnet, dass** zwischen dem Gehäuse (6) und dem Haltering (5) ein Fluidkanal (9) ausgebildet ist.

8. Gleitringdichtungsanordnung nach Anspruch 7, **dadurch gekennzeichnet, dass** der Haltering (5) wenigstens einen Verbindungskanal (10) aufweist, welcher vom Fluidkanal (9) zu einem Produktbereich (20) an einer radialen Außenseite des Dichtspalts (4) führt.

9. Gleitringdichtungsanordnung nach einem der vorhergehenden Ansprüche, **dadurch gekennzeichnet, dass** das Gehäuse (6) wenigstens eine Medienleitung (11) zum Zuführen eines Mediums aufweist.

## Claims

1. Mechanical seal arrangement comprising:
- a rotating slide ring (2) and a stationary slide ring (3) which define a sealing gap (4) between them,
- a housing (6), and
- a holding ring (5) for holding the stationary slide ring (3),
- wherein a clamp connection (7) is provided between the housing (6) and the holding ring (5) by way of at least one clamp component (8) and
- wherein the clamp component (8) is a countersunk bolt, which has on a head (80) a cone (81),
**characterized in that**
the cone (81) being set up for a clamp connection with a first conical region (71) on the housing (6) and a second conical region (72) on the holding ring (5).

2. Mechanical seal arrangement as claimed in claim 1, **characterised in that** the clamp connection (7) is arranged on an end face (61) of the housing (6).

3. Mechanical seal arrangement as claimed in any one of the preceding claims, **characterised in that** the housing (6) is single-piece.

4. Mechanical seal arrangement as claimed in claim 1, **characterised in that** the holding ring (5) comprises a radially outwardly protruding projection (51), the second conical region (72) being formed on the projection (51).

5. Mechanical seal arrangement as claimed in any one of the preceding claims, **characterised in that** the housing (6) engages around the holding ring (5) in part.

6. Mechanical seal arrangement as claimed in any one of the preceding claims, **characterised in that** the housing (6) comprises a contact face (60) against which the holding ring (5) lies.

7. Mechanical seal arrangement as claimed in claim 6, **characterised in that** a fluid duct (9) is formed between the housing (6) and the holding ring (5).

8. Mechanical seal arrangement as claimed in claim 7, **characterised in that** the holding ring (5) comprises at least one connection duct (10), which leads from the fluid duct (9) to a product region (20) on an outer face of the sealing gap (4).

9. Mechanical seal arrangement as claimed in any one of the preceding claims, **characterised in that** the housing (6) comprises at least one medium line (11) for supplying a medium.

## Revendications

1. Ensemble d'étanchéité à bagues de glissement comprenant :
- une bague de glissement rotative (2) et une bague de glissement fixe (3), lesquelles délimitent entre elles une fente d'étanchéité (4),
- un boîtier (6), et
- une bague de retenue (5) pour retenir la bague de glissement fixe (3),
- dans lequel
- une liaison par serrage (7) est prévue entre le boîtier (6) et la bague de retenue (5) au moyen d'au moins un composant de serrage (8), et
- le composant de serrage (8) est une vis à tête fraisée, laquelle présente un cône (81) au niveau d'une tête (80), **caractérisé en ce que** le cône (81) est conçu pour la liaison par serrage avec une première zone conique (71) au niveau du boîtier (6) et une seconde zone conique (72) au niveau de la bague de retenue (5).

2. Ensemble d'étanchéité à bagues de glissement selon la revendication 1, **caractérisé en ce que** la liaison par serrage (7) est disposée au niveau d'un côté frontal (61) du boîtier (6).

3. Ensemble d'étanchéité à bagues de glissement selon l'une quelconque des revendications précédentes, **caractérisé en ce que** le boîtier (6) est d'un seul tenant.

4. Ensemble d'étanchéité à bagues de glissement selon la revendication 1, **caractérisé en ce que** la bague de retenue (5) présente un prolongement (51) faisant saillie radialement vers l'extérieur, dans lequel la seconde zone conique (72) est réalisée au niveau du prolongement (51).

5. Ensemble d'étanchéité à bagues de glissement selon l'une quelconque des revendications précédentes, **caractérisé en ce que** le boîtier (6) recouvre en partie la bague de retenue (5).

6. Ensemble d'étanchéité à bagues de glissement selon l'une quelconque des revendications précédentes, **caractérisé en ce que** le boîtier (6) présente une surface d'appui (60), sur laquelle la bague de retenue (5) s'appuie.

7. Ensemble d'étanchéité à bagues de glissement selon la revendication 6, **caractérisé en ce qu'**un canal de fluide (9) est réalisé entre le boîtier (6) et la bague de retenue (5).

8. Ensemble d'étanchéité à bagues de glissement selon la revendication 7, **caractérisé en ce que** la bague de retenue (5) présente au moins un canal de liaison (10), lequel conduit du canal de fluide (9) à une zone de produit (20) au niveau d'un côté extérieur radial de la fente d'étanchéité (4).

9. Ensemble d'étanchéité à bagues de glissement selon l'une quelconque des revendications précédentes, **caractérisé en ce que** le boîtier (6) présente au moins une conduite de milieu (11) pour l'amenée d'un milieu.
